# EUROPÄISCHE PATENTSCHRIFT

(11) **EP 0 799 165 B1**
(45) Veröffentlichungstag und Bekanntmachung des Hinweises auf die Patenterteilung: **21.04.1999**
(21) Anmeldenummer: 95942171.0
(22) Anmeldetag: 16.12.1995
(51) Int. Cl.: C03C 17/00

(54) **VORRICHTUNG ZUR OBERFLÄCHENBEHANDLUNG VON HOHLGLASKÖRPERN**
DEVICE FOR THE SURFACE TREATMENT OF HOLLOW GLASS BODIES
DISPOSITIF DE TRAITEMENT DE SURFACE DE RECIPIENTS EN VERRE

(30) Priorität: 23.12.1994 DE 4446217
(43) Veröffentlichungstag der Anmeldung: 08.10.1997
(73) Patentinhaber: Keramchemie GmbH, D-56427 Siershahn (DE)
(72) Erfinder: HOFER, Wolfgang, D-56179 Vallendar (DE); SCHMITT, Rolf, D-56414 Berod (DE)
(74) Vertreter: Kossobutzki, Walter, Dipl.-Ing.(FH)
(86) Internationale Anmeldenummer: EP9504983
(87) Internationale Veröffentlichungsnummer: WO9620142

(56) Entgegenhaltungen:
- EP-A- 0 494 495
- GB-A- 2 069 475
- US-A- 4 879 970

## Beschreibung

Die Erfindung bezieht sich auf eine Vorrichtung zur Oberflächenbehandlung, insbesondere zur Heißendvergutung von Hohlglaskörpern, mittels eines mit Vergütungsstoffen angereicherten Trägergases, bestehend aus einer tunnelartigen Bedampfungshaube mit einem sich im Bodenbereich derselben in Längsrichtung erstreckenden und dem Transport der Hohlglaskörper dienenden Förderband und mit an den Seiten ausgebildeten großflächigen Bereichen zum wechselseitigen Ausblasen und Ansaugen des die Hohlglaskörper umströmenden und auf den Oberflächen derselben eine Metalloxidschicht erzeugenden Trägergases.

Um die Festigkeitseigenschaften von Glasflaschen zu erhöhen, ist es bekannt, die Oberfläche derselben zu vergüten. Dazu werden die Glasflaschen mit einer Temperatur zwischen 370° und 750° C auf einem Förderband durch eine tunnelförmige Bedampfungshaube transportiert, innerhalb der die Glaskörper von einem mit Vergütungsstoffen angereicherten Trägergas beströmt werden. Bei den Vergütungsstoffen handelt es sich um Metallverbindungen, insbesondere des Zinns, Titans oder Zirkons, die sich auf der heißen Glasoberfläche zersetzen und dort eine dünne Metalloxidschicht bilden. Die bekannten Bedampfungshauben weisen seitliche Bereiche auf, über die das Trägergas wechselweise ausgeblasen und angesaugt wird. Bei einer beispielsweise aus der EP-OS 0 494 495 bekannten Verdampfungshaube, sind die seitlichen Ausblas- und Ansaugbereiche durch mehrere nebeneinander angeordnete Kanäle gebildet, die sich zwischen einer Ausblas- bzw. Ansaugkammer und der tunnelartigen Bedampfungshaube erstrecken und die verhältnismäßig lang ausgebildet sind. Zwischen den seitlich sowie oben und unten geschlossenen Kanälen sind Freiräume vorhanden, durch die bedarfsweise ein Kühlmedium geführt werden kann. Die Kanäle erweitern sich, von der Ausblas- bzw. Ansaugkammer ausgehend, trichterförmig in Richtung auf die tunnelartige Behandlungshaube.

Die Herstellung der einzelnen nebeneinander angeordneten und miteinander verbundenen Kanäle erfordert einen hohen Fertigungsaufwand. Die der Bedampfungshaube zugewandten Enden der Kanäle sind einer hohen Wärmestrahlung durch die heißen Glasflaschen ausgesetzt, was zu einer unerwünschten Überhitzung der Kanalenden und damit zu einer Zersetzung der Vergütungsstoffe auf der heißen Metalloberfläche führen kann. Dadurch erhöht sich einerseits der Verbrauch an Vergütungsstoffen. Andererseits kommt es zu Ablagerungen, die die Funktion der Bedampfungshaube stark beeinträchtigen. Hier hilft es auch wenig, daß die Seitenwände der Kanäle durch ein durch die Freiräume strömendes Medium gekühlt werden können, denn dasselbe übt auf die erhitzten inneren Enden der Kanäle keine nennenswerte Kühlwirkung aus.

Für eine effektive und gleichmäßige Aufbringung der Vergütungsstoffe auf die Oberflächen der Glasflaschen wird eine möglichst hohe Anströmgeschwindigkeit und ein möglichst gleichmäßiges Geschwindigkeitsprofil angestrebt. Andererseits sind der unbegrenzten Steigerung der Anströmgeschwindigkeit dadurch Grenzen gesetzt, daß die Gefahr besteht, daß die Glasflaschen an Stellen hoher, lokaler Strömungsgeschwindigkeit vom Förderband geblasen werden. Bei den vorbekannten Bedampfungshauben ist die Anströmgeschwindigkeit der Glasflaschen im mittleren Bereich der Ausblas- und Ansaugöffnungen verhältnismäßig hoch, während sie im äußeren Bereich derselben, also dort wo zwei Trägergasströme zusammentreffen, annähernd auf "Null" absinken kann. Dies bringt ebenfalls einen erhöhten Verbrauch an wertvollen Vergütungsstoffen mit sich.

Der Erfindung liegt deshalb die Aufgabe zugrunde, eine Vorrichtung zur Oberflächenbehandlung der eingangs beschriebenen Gattung so auszugestalten, daß der bisher für die Herstellung der Kanäle erforderliche Aufwand entfällt, eine zu starke Erwärmung der mit den Vergütungsstoffen des Trägergases in Berührung kommenden Metallteile der Ansaug-und Ausblasbereich der Bedampfungshaube vermieden und somit eine Überhitzung und die damit verbundene Zersetzung der Vergütungsstoffe ausgeschlossen wird. Die Bildung von Ablagerungen soll weitgehend ausgeschlossen und gleichzeitig die Geschwindigkeitsverteilung des ausgeblasenen Trägergases erheblich verbessert werden.

Zur Lösung dieser Aufgabe wird gemäß der Erfindung bei einer Vorrichtung der eingangs beschriebenen Gattung vorgeschlagen, daß die seitlichen großflächigen Bereiche durch rohrförmige Körper in mehrere Öffnungen unterteilt sind.

Bei einer solchen Ausgestaltung setzen die rohrförmigen Körper der Strömung des Trägergases einen widerstand entgegen, der zu einer gleichmäßigeren Verteilung des Trägergases über den gesamten Ausblasbereich führt. Kurz hinter den rohrförmigen Körpern bildet sich ein einheitliches Geschwindigkeitsprofil aus. Ein Abblasen der Hohlglaskörper vom Förderband ist daher auch bei einem verhältnismäßig hohen Umwälzvolumenstrom nicht mehr gegeben. Die Gefahr einer Überhitzung und die damit verbundene Zersetzung der Vergütungsstoffe des Trägergases wird vermieden und es treten keine Ablagerungen mehr an den mit den Vergütungsstoffen in Berührung kommenden Metallteilen auf. Die Effizienz der Vorrichtung wird insbesondere durch die bessere Ausnutzung und den geringeren Verbrauch der Vergütungsstoffe erheblich erhöht. Da keine langgestreckten und ausgeprägten Kanäle mehr vorhanden sind, entfällt der damit verbundene Herstellungsaufwand.

Weitere Merkmale einer Vorrichtung gemäß der Erfindung sind in den Ansprüchen 2-10 offenbart.

Die Erfindung wird nachfolgend anhand eines in einer Zeichnung in stark vereinfachter Weise dargestellten Ausführungsbeispieles näher erläutert. Dabei zeigen
- Fig. 1: eine Draufsicht auf eine Vorrichtung gemäß der Erfindung und
- Fig. 2: eine Seitenansicht der Vorrichtung der Fig. 1.

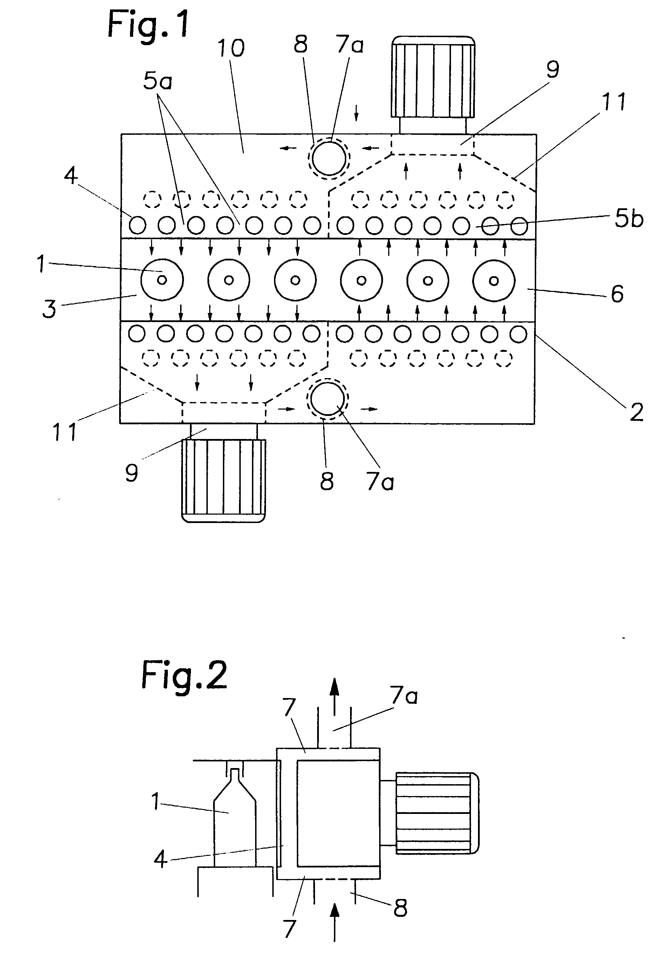

In den Fign. 1 und 2 der Zeichnung ist eine Vorrichtung zur sogenannten Heißendvergütung von nur angedeuteten Glasflaschen 1 gezeigt, die aus einer tunnelförmigen Bedampfungshaube 2 mit einem Förderband 3 besteht. Mittels des Förderbandes 3 werden die Glasflaschen 1 durch die Bedampfungshaube 2 geführt. Die seitlichen Begrenzungen der Bedampfungshaube 2 werden durch mehrere rohrförmige Körper 4 gebildet, die Öffnungen 5a, 5b begrenzen, die, je nach Ausgestaltung der Bedampfungshaube 2, zum Ausblasen oder Ansaugen eines mit Vergütungsstoffen angereicherten Trägergases dienen und damit Ausblasöffnungen 5a oder Ansaugöffnungen 5b bilden.

Die rohrförmigen Körper 4 weisen im dargestellten Ausführungsbeispiel einen kreisförmigen Querschnitt auf und erstrecken sich über die gesamte Höhe des tunnelartigen Bedampfungsraumes 6. An ihren oberen und unteren Enden gehen die rohrförmigen Körper 4 in verhältnismäßig flache Kanäle 7 über, die seitlich oberhalb und unterhalb des tunnelartigen Bedampfungsraumes 6 ausgebildet sind. An den unteren Kanal 7 ist ein Ventilator 8 angeschlossen, über den beispielsweise Raumluft angesaugt und von unten durch den unteren Kanal 7, die rohrförmigen Körper 4 und den oberen Kanal 7 zu einer oberen Austrittsöffnung 7a geblasen wird. Dieser durch die rohrförmigen Körper 4 strömende Luftstrom, der auch als Kühlmittelstrom zu bezeichnen ist, hat zur Folge, daß das durch die Ausblas- und Ansaugöffnungen 5a, 5b zwischen den rohrförmigen Körpern 4 strömende und mit Vergütungsstoffen angereicherte Trägergas abgekühlt wird. Dieses Trägergas wird beispielsweise von einem nur angedeuteten Ventilator 9 in eine Druckkammer 10 gefördert, von der es dann durch die Ausblasöffnungen 5a in den tunnelartigen Bedampfungsraum 6 strömt. Zusätzlich wird dieses Trägergas aber auch noch über die in den Kanälen 7 strömende Luft gekühlt, an die die Druckkammer 10 und eine Ansaugkammer 11 angrenzen. Über die im Bereich der Ansaugkammer 11 zwischen den rohrförmigen Körpern 4 gebildeten Ansaugöffnungen 5b wird dann das aus den gegenüberliegenden Ausblasöffnungen 5a ausströmende Trägergas angesaugt, welches dann wieder über den Ventilator 9 in die Druckkammer 10 zur erneuten Beaufschlagung der tunnelartigen Bedampfungskammer 6 im Kreislauf geführt wird.

Im dargestellten Ausführungsbeispiel sind zwei Ventilatoren 9 mit den Druckkammern 10 und den Ansaugkammern 11 gegeneinander versetzt angeordnet, so daß sich also zwei Bereiche mit jeweils mehreren Ausblas- und Ansaugöffnungen 5a, 5b gegenüberliegen.

In Abänderung des erläuterten Ausführungsbeispieles ist es möglich, daß die rohrförmigen Körper 4 einen anderen als den dargestellten Querschnitt aufweisen. Beispielsweise ist auch ein ovaler oder eckiger bzw. rechteckiger Querschnitt möglich. Vorteilhaft sind jedoch solche Querschnitte, die es ermöglichen, daß die rohrförmigen Körper 4 von einem Rohrstab abgeschnitten werden können. Für den Fall, daß die angestrebte Kühlung des Trägergases durch den durch die rohrförmigen Körper 4 strömenden Kühlmittelstrom nicht ausreichen sollte, ist es möglich, hinter den in einer Reihe angeordneten rohrförmigen Körpern 4 noch mindestens eine weitere Reihe von rohrförmigen Körpern 4 vorzusehen, wobei jedoch die rohrförmigen Körper 4 der einen Reihe gegenüber den rohrförmigen Körpern 4 der anderen Reihe gegeneinander versetzt sind. Ferner ist es möglich, auf jeder Seite der Bedampfungshaube 2 mehrere Saug- und Druckkammern 10,11 sowie Kammern, die mit keinem Ventilator 9 verbunden sind, zuzuordnen. Den Saug- und Druckkammern 10,11 liegt dann jeweils eine drucklose Kammer gegenüber. Bei einer solchen Ausgestaltung wird jedoch kein zwangsgeförderter Umwälzkreislauf erzielt.

## Patentansprüche

1. Vorrichtung zur Oberflächenbehandlung, insbesondere zur Heißendvergütung von Hohlglaskörpern, mittels eines mit Vergütungsstoffen angereicherten Trägergases, bestehend aus einer tunnelartigen Bedampfungshaube mit einem sich im Bodenbereich derselben in Längsrichtung erstreckenden und dem Transport der Hohlglaskörper dienenden Förderband und mit an den Seiten ausgebildeten, großflächigen Bereichen zum wechselseitigen Ausblasen und Ansaugen des die Hohlglaskörper umströmenden und auf den Oberflächen derselben eine Metalloxidschicht erzeugenden Trägergases, dadurch gekennzeichnet,
daß die seitlichen großflächigen Bereiche durch rohrförmige Körper (4) in mehrere Öffnungen (5a,5b) unterteilt sind.

2. Vorrichtung nach Anspruch 1,
dadurch gekennzeichnet,
daß die rohrförmigen Körper (4) einen runden, ovalen und/oder eckigen Querschnitt aufweisen.

3. Vorrichtung nach Anspruch 1 oder 2,
dadurch gekennzeichnet,
daß die rohrförmigen Körper (4) an eine Kühlmittelleitung angeschlossen sind.

4. Vorrichtung nach Anspruch 3,
dadurch gekennzeichnet,
daß zumindest ein Teil der Kühlmittelleitung durch oberund/oder unterhalb der tunnelartigen Behandlungshaube (2) ausgebildete Kanäle (7) gebildet ist.

5. Vorrichtung nach Anspruch 3 oder 4,
dadurch gekennzeichnet,
daß die Kühlmittelleitung und die rohrförmigen Körper (4) von einem gasförmigen oder flüssigen Kühlmittelstrom beaufschlagbar sind.

6. Vorrichtung nach mindestens einem der Ansprüche 1 - 5,
dadurch gekennzeichnet,
daß zumindest an einem seitlichen Bereich der tunnelartigen Behandlungshaube (2) mindestens eine Gruppe von Ausblas- und/oder Ansaugöffnungen (5a, 5b) ausgebildet ist.

7. Vorrichtung nach Anspruch 6,
dadurch gekennzeichnet,
daß einer Gruppe von Ausblasöffnungen (5a) eine Gruppe von Ausblasöffnungen (5a) und einer Gruppe von Ansaugöffnungen (5b) eine Gruppe von Ansaugöffnungen (5b) gegenüberliegend angeordnet ist.

8. Vorrichtung nach Anspruch 6,
dadurch gekennzeichnet,
daß einer Gruppe von Ausblasöffnungen (5a) eine Gruppe von Ansaugöffnungen (5b) gegenüberliegend angeordnet ist.

9. Vorrichtung nach mindestens einem der Ansprüche 1 - 8,
dadurch gekennzeichnet,
daß hinter einer ersten Reihe von rohrförmigen Körpern (4) mindestens eine weitere Reihe von rohrförmigen Körpern (4) angeordnet ist.

10. Vorrichtung nach Anspruch 9,
dadurch gekennzeichnet,
daß der rohrförmige Körper (4) einer Reihe gegenüber den rohrförmigen Körpern (4) der anderen Reihe versetzt angeordnet sind.

11. Vorrichtung nach mindestens einem der Ansprüche 1 - 10,
dadurch gekennzeichnet,
daß der Umwälzvolumenstrom des Trägergases durch Veränderung der Drehzahl mindestens eines Ventilators (9) den Erfordernissen der unterschiedlichen Hohlglaskörper (1) anpaßbar ist.

## Claims

1. Device for the surface treatment, in particular hot end coating of hollow glass bodies by means of a carrier gas enriched with coating materials, consisting of a tunnel-like vaporisation hood with a conveyor belt extending in the longitudinal direction in the bottom region thereof and serving for the transport of the hollow glass bodies and with large-area regions formed on the sides for alternately blowing out and drawing in the carrier gas flowing around the hollow glass bodies and producing a metal oxide layer on the surfaces thereof, characterised in that the lateral large-area regions are divided into a plurality of openings (5a, 5b) by means of tubular bodies (4).

2. Device according to claim 1, characterised in that the tubular bodies (4) have a circular, oval and/or angular cross section.

3. Device according to claim 1 or claim 2, characterised in that the tubular bodies (4) are connected to a coolant pipe.

4. Device according to claim 3, characterised in that at least part of the coolant pipe is formed by channels (7) formed above and/or below the tunnel-like treatment hood (2).

5. Device according to claim 3 or claim 4, characterised in that a gaseous or liquid coolant stream can be applied to the coolant pipe and the tubular bodies (4).

6. Device according to at least one of claims 1 - 5, characterised in that at least one group of exhaust and/or suction openings (5a, 5b) is formed at least on a lateral region of the tunnel-like treatment hood (2).

7. Device according to claim 6, characterised in that a group of exhaust openings (5a) is arranged opposite a group of exhaust openings (5a) and a group of suction openings (5b) is arranged opposite a group of suction openings (5b).

8. Device according to claim 6, characterised in that a group of suction openings (5b) is arranged opposite a group of exhaust openings (5a).

9. Device according to at least one of claims 1 - 8, characterised in that at least one further row of tubular bodies (4) is arranged behind a first row of tubular bodies (4).

10. Device according to claim 9, characterised in that the tubular bodies (4) of one row are arranged so that they are offset relative to the tubular bodies (4) of the other row.

11. Device according to at least one of claims 1 - 10, characterised in that the circulation volume flow rate of the carrier gas can be adapted to the requirements of the different hollow glass bodies (1) by varying the speed of rotation of at least one ventilator (9).

## Revendications

1. Dispositif pour le traitement de surface, notamment pour le traitement final à chaud de corps en verre creux, à l'aide d'un gaz porteur enrichi par des substances de traitement, constitué par un dôme de vaporisation en forme de tunnel comportant une bande convoyeuse qui s'étend dans la zone du fond du dôme dans la direction longitudinale et est utilisée pour le transport des corps en verre creux, et comportant des zones de surface étendue, formées sur les côtés et servant à exécuter alternativement l'éjection par soufflage et l'aspiration du gaz porteur qui circule autour des corps en verre creux et produit une couche d'oxyde métallique sur les surfaces de ces corps, caractérisé en ce que les zones latérales de surface étendue sont subdivisées par des corps de forme tubulaire (4) en plusieurs ouvertures (5a, 5b).

2. Dispositif selon la revendication 1, caractérisé en ce que les corps de forme tubulaire (4) possèdent une section transversale circulaire, ovale et/ou anguleuse.

3. Dispositif selon la revendication 1 ou 2, caractérisé en ce que les corps de forme tubulaire (4) sont raccordés à une canalisation pour un fluide de refroidissement.

4. Dispositif selon la revendication 3, caractérisé en ce qu'au moins une partie de la canalisation pour un fluide de refroidissement est formée par des canaux (7) disposés au-dessus et/ou au-dessous du dôme de traitement en forme de tunnel (2).

5. Dispositif selon la revendication 3 ou 4, caractérisé en ce que la canalisation pour le fluide de refroidissement et les corps de forme tubulaire (4) peuvent être chargés par un écoulement du fluide de refroidissement gazeux ou liquide.

6. Dispositif selon au moins l'une des revendications 1-5, caractérisé en ce qu'au moins un groupe d'ouvertures (5a, 5b) d'éjection par soufflage et/ou d'aspiration sont formées au moins dans une zone latérale du dôme de traitement (2) en forme de tunnel.

7. Dispositif selon la revendication 6, caractérisé en ce qu'un groupe d'ouvertures d'éjection par soufflage (5a) est disposé en vis-à-vis d'un groupe d'ouvertures d'éjection par soufflage (5a) et qu'un groupe d'ouvertures d'aspiration (5b) est disposé en vis-à-vis d'un groupe d'ouvertures d'aspiration (5b).

8. Dispositif selon la revendication 6, caractérisé en ce qu'un groupe d'ouvertures d'aspiration (5a) est disposé en vis-à-vis d'un groupe d'ouvertures d'éjection par soufflage (5a).

9. Dispositif selon au moins l'une des revendications 1-8 caractérisé en ce qu'en arrière d'une première rangée de corps de forme tubulaire (4) est disposé au moins une autre rangée de corps de forme tubulaire (4).

10. Dispositif selon la revendication 9, caractérisé en ce que les corps de forme tubulaire (4) d'une rangée sont disposés en étant décalés par rapport aux corps de forme tubulaire (4) de l'autre rangée.

11. Dispositif selon au moins l'une des revendications 1-10, caractérisé en ce que le courant volumique de circulation du gaz porteur peut être adapté, par modification de la vitesse de rotation d'au moins un ventilateur (9), aux exigences imposées par les différents corps en verre creux (1).
